# EUROPEAN PATENT SPECIFICATION

(11) **EP 2 101 055 B1**
(45) Date of publication and mention of the grant of the patent: **30.11.2011**
(21) Application number: 08004487.8
(22) Date of filing: 11.03.2008
(51) Int. Cl.: F02F 1/42, F02B 31/06

(54) **Engine with intake control device**
Motor mit Einlasssteuerungsvorrichtung
Moteur avec dispositif de contrôle d'admission

(43) Date of publication of application: 16.09.2009
(73) Proprietor: Yamaha Hatsudoki Kabushiki Kaisha, Shizuoka-ken Shizuoka 438-8501 (JP)
(72) Inventor: Maeda, Hiroyuki, Iwata-shi Shizuoka-ken 438-8501 (JP)
(74) Representative: Grünecker, Kinkeldey, Stockmair & Schwanhäusser

(56) References cited:
- WO-A-2007/132311
- US-A- 4 543 931
- US-A- 5 632 244

## Description

The present invention relates to an engine with an intake control device for generating a tumble in a cylinder according to the preamble portion of claim 1.

Such a kind of a conventional intake control device for an engine is disclosed in Patent Documents 1 and 2, **and** WO 2007/132311. The intake control device for an engine disclosed in Patent Documents 1 and 2 includes a partition plate for partitioning an intake passage in an engine into an upper intake passage and a lower intake passage as seen from the axial direction of a crankshaft, and a tumble control valve provided in a vicinity of an upstream part of the partition plate for opening or closing the lower intake passage.

The intake control device disclosed in Patent Document 1 includes a flow straighting member for regulating a flowing direction of intake air while being linked with the tumble control valve. The flow straighting member forms both side walls of a downstream end of the upper intake passage. The flow straighting member is in a position away from an intake valve in the upstream direction when the tumble control valve is open, and moves to a position adjacent to the intake valve when the tumble control valve is closed.

The flow straighting member approaches to the intake valve, thereby intake air gathers to a part around the center of a combustion chamber, and thus tumble generation is facilitated.

A function for changing a flowing direction of intake air for facilitating tumble generation as described above is realized in a manner such that the partition plate approaches toward the intake valve in the intake control device disclosed in Patent Document 2. The partition plate of the intake control device disclosed in Patent Document 2 is provided movably to a cylinder head along the intake passage, and makes a parallel displacement linked with opening or closing of the tumble control valve.

In the intake control devices disclosed in Patent Documents 1 and 2, the tumble control valve is closed, and thereby intake air mainly flows in the upper intake passage. Consequently, in the intake control device, a flowing direction of intake air is regulated because of displacements of the flow straighting member and the partition plate toward the intake valve. As a result, in an engine including the intake control device disclosed in Patent Document 1 or 2, a tumble is generated in the cylinder because of intake air flowed from the upper intake passage into the cylinder. A tumble means a whirling flow of intake air, which is whirling around the center line extending in a direction intersecting with the axial line of the cylinder.
Patent Document 1: JP-A-2003-239751
Patent Document 2: JP-A-2003-278551

There was a limit in further effective tumble generation with the conventional intake control device constructed as described above. It is considered that the limit occurs because when the tumble control valve is closed, drag of intake air becomes large, and a so-called flow coefficient largely decreases.

Also, the conventional intake control device has to include a movable flow straighting member and a partition plate to facilitate tumble generation, and thus its construction is complicated.

The present invention is made to solve such a problem, and the object is to provide an engine with an intake control device as indicated above, in which a further effective tumble is generated in the cylinder with a simple construction.

This objective is solved in an inventive manner by an engine comprising a cylinder, an intake passage, and an intake control device for generating a tumble flow inside the cylinder, said intake control device comprising a partition plate provided in the intake passage separating the intake passage into first and second intake passages, and a tumble control valve provided at an upstream end of the partition plate to open and close only one of the first and second sub-intake passages, wherein a wall section forming part of the inlet of that one of the first or second sub-intake passages not to be closed or opened with the tumble control valve is formed as an air funnel for the air flowing into the respective one of the sub-intake passages, wherein a tilt angle of the wall section relative to the partition plate is set to an angle between 25° to 30°.

Preferably, said wall section around the inlet is inclined to be gradually separated further away from the partition plate as proceeding to a more upstream part.

Still further, preferably the partition plate provided in the intake passage extends obliquely upward from a combustion chamber as seen from the axial direction of a crankshaft for dividing the intake passage into an upper sub-intake passage and a lower sub-intake passage as seen from the axial direction of the crankshaft, and in that the tumble control valve provided in a vicinity of an upstream part of the partitioning plate in the intake passage for opening or closing a part of the intake passage is configured to open or close the intake passage upper than the partition plate, and a bottom wall, which is a part of a wall forming a part around an inlet of the lower intake passage and positioned on the side opposite to the partition plate, is slantly formed to be gradually separated from the partition plate as proceeding to a more upstream part.

Yet further still, preferably the partition plate is inclined in a manner such that an extension line from the partition plate toward the combustion chamber passes between the center of a lower surface of a valve disc of an intake valve and an edge of the lower surface of the valve disc, which is positioned close to the center of the combustion chamber.

In the following, the present invention is explained in greater detail with respect to several embodiments thereof in conjunction with the accompanying drawings, wherein:
- FIG. 1: is a front view of an engine including an intake control device according to the present teaching,
- FIG. 2: is an enlarged cross-sectional view of the embodiment of Fig. 1,
- FIG. 3: is an enlarged cross-sectional view showing an attachment part of an in- cylinder injector,
- FIG. 4: is a cross-sectional view of an intake passage taken along a line IV-IV in FIG. 2,
- FIG. 5: is a cross-sectional view taken along a line V-V in FIG. 2,
- FIG. 6: is a cross-sectional view taken along a line VI-VI in FIG. 2, and
- FIG. 7: is a cross-sectional view taken along a line VII-VII in FIG. 2.

Brief Description of Reference Numerals and Symbols:
1: engine
4: crankshaft
7: cylinder head
12: intake port
14: intake valve
17: in-cylinder injector
18: intake passage injector
21: intake control device
22: downstream partition plate
34: intake manifold
35: upstream partition plate
36, 47: upper intake passage
37, 48: lower intake passage
41: auxiliary intake manifold
45: tumble control valve
51: bottom wall

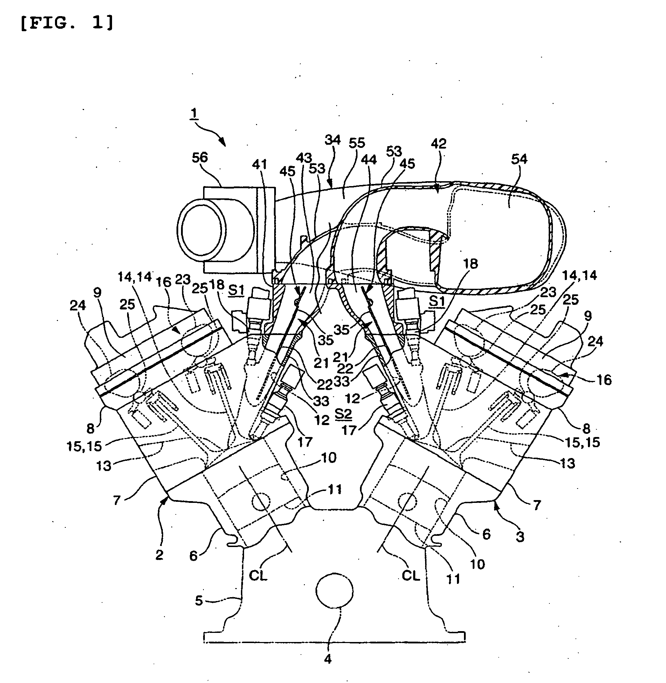

An embodiment of the intake control device for an engine according to the present teaching will be described in detail hereinafter with reference to FIGs. 1 through 7.

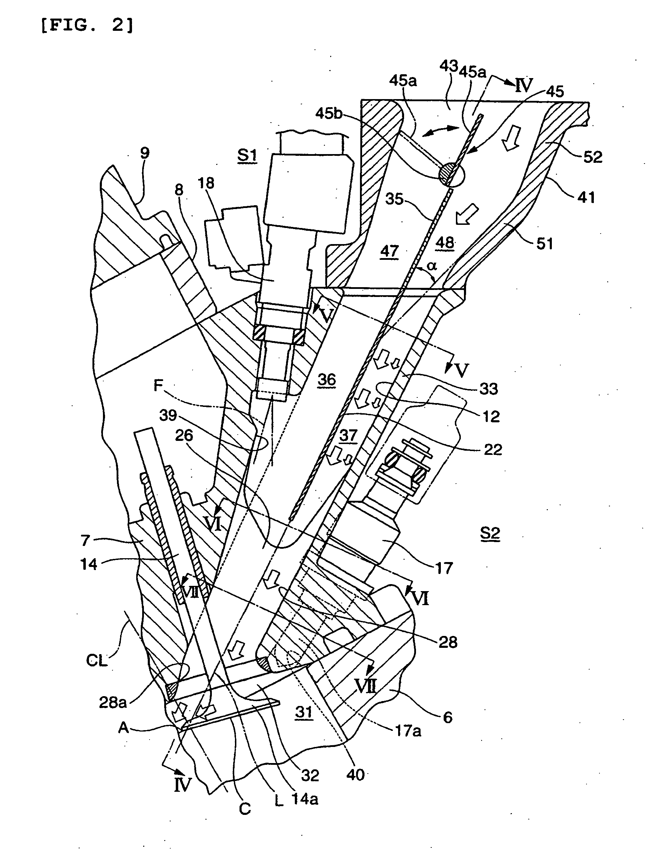

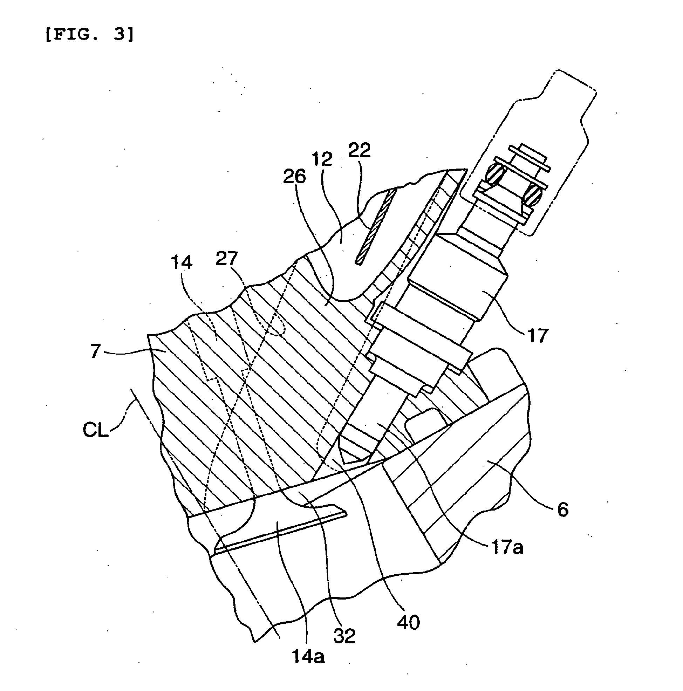

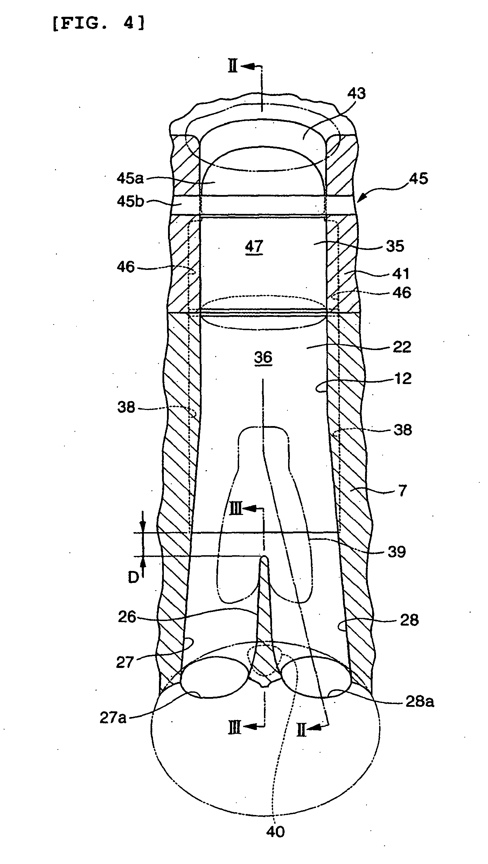

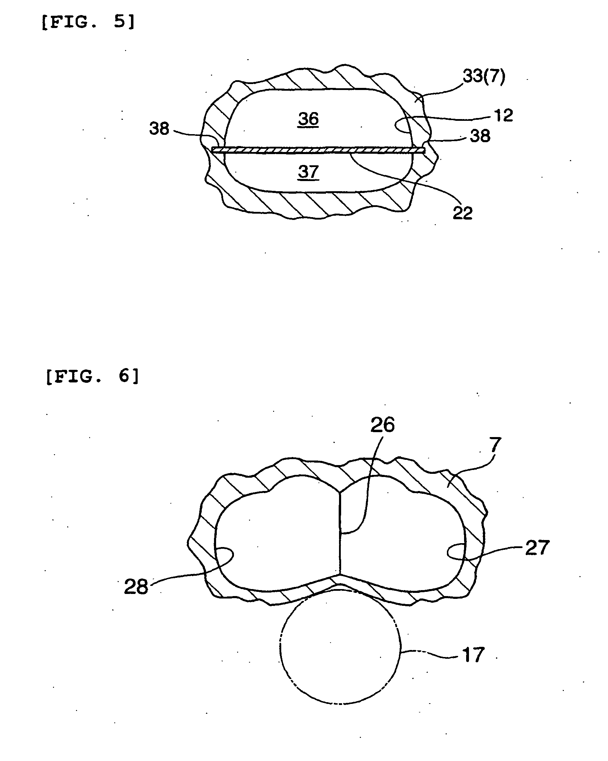

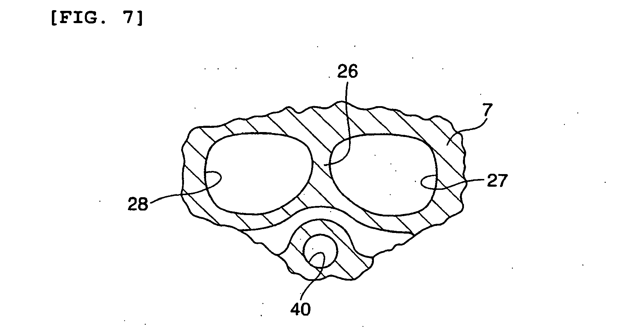

FIG. 1 is a front view of the engine including the intake control device according to the present teaching. In FIG. 1, an upstream part of an intake passage is cut away. FIG. 2 is an enlarged cross-sectional view of the embodiment of Fig. 1. FIG. 3 is an enlarged cross-sectional view showing an attachment part of an in-cylinder injector. FIG. 4 is a cross-sectional view of the intake passage taken along a line IV-IV in FIG. 2. In FIG. 4, the positions, along which the cross section of FIG.2 is taken, are shown by a line II-II, and the positions, along which the cross section of FIG. 3 is taken, are shown by a line III-III. FIGs. 5 through 7 are cross-sectional views of the intake passage. FIG. 5 is a cross-sectional view taken along a line V-V in FIG. 2. FIG. 6 is a cross-sectional view taken along a line VI-VI in FIG. 2. FIG. 7 is a cross-sectional view taken along a line VII-VII in FIG. 2.

In the drawings, a reference numeral 1 denotes the engine for an automobile according to this embodiment. The engine 1 is a V-type six-cylinder engine, and includes a first cylinder line 2 positioned on the left in FIG. 1 and a second cylinder line 3 positioned on the right in FIG. 1. In this specification, as shown in FIG. 1, a side close to each other cylinder line between both the right and left sides of each of the cylinder lines 2 and 3 viewing the engine 1 in the axial direction of a crankshaft 4 is referred to as "the inner side of a V-bank," and the other side is referred to as "the outer side of the V-bank." Since the cylinder lines 2 and 3 have similar constructions, detailed description will be made on the first cylinder line 2 hereinafter. The same reference numerals and symbols will be given to members of the second cylinder line 3, and detailed descriptions will not be made.

The first cylinder line 2 and the second cylinder line 3 are constructed with cylinder bodies 6 provided to protrude on a cylinder block 5 shared by both the cylinder lines 2 and 3, cylinder heads 7 mounted on the cylinder bodies 6, cam housings 8 and head covers 9 mounted on the cylinder heads 7, and so forth. Three cylinder bores 10 are formed to align in the axial direction of the crankshaft 4 on the cylinder body 6. In FIG. 1, a reference numeral 11 denotes a piston fitted into the cylinder bore 10.

The cylinder head 7 includes an intake port 12 and an exhaust port 13 formed in it, which will be described later, an intake valve 14 and an exhaust valve 15 for opening or closing the ports 12 and 13, a valve operation system 16 for operating the intake and exhaust valves 14 and 15, an in-cylinder injector 17, an intake passage injector 18, and a downstream partition plate 22 forming a part of an intake control device 21 according to the present teaching.

Two intake valves 14 and two exhaust valves 15 are provided on the cylinder head 7 in each of the cylinders. The valve operation system 16 drives the intake valve 14 and the exhaust valve 15 by an intake camshaft 23 and an exhaust camshaft 24, and a locker arm 25 provided on each of the camshafts.

The intake port 12 constructs a part of the intake passage of the present teaching, and is formed on the inner side of the V-bank of the cylinder head 7. As shown in FIGs. 4, 6 and 7, a downstream end of the intake port 12 is formed to bifurcate into a first bifurcating port 27 and a second bifurcating port 28, which are partitioned from each other by a partition 26. The first bifurcating port 27 and the second bifurcating port 28 are opened or closed by the two intake valves 14, 14.

As shown in FIG. 2, downstream ends of the first bifurcating port 27 and the second bifurcating port 28 open on a part in the cylinder head 7, which is an upper wall 32 of a combustion chamber 31. As shown in FIG. 1, the intake port 12 according to this embodiment is formed to linearly extend obliquely upward relative to the axial line CL of the cylinder from the opening at the downstream end.

An upstream part of the intake port 12 is formed in an intake pipe connection part 33 provided to protrude toward the other cylinder line at an end of the cylinder head 7 on the inner side of the V-bank. An upper end of the intake pipe connection part 33 is formed to be a generally horizontal flat surface. An intake manifold 34 described bellow (see FIG. 1) is mounted thereon.

As shown in FIGs. 1 and 2, the downstream partition plate 22 is provided in the intake port 12. The partition plate 22 forms the partition plate in the present teaching together with an upstream partition plate 35 close to the intake manifold 34, which will be described bellow. The downstream partition plate 22 is formed with aluminum alloy as a body separate from the cylinder head 7, and is installed to partition the intake port 12 into an upper intake passage 36 and a lower intake passage 37. As shown in FIG. 5, the downstream partition plate 22 is positioned at a general vertical center of the intake port 12 viewing an inside of the intake port 12 from the upstream.

Both edges (both right and left edges in FIG. 5) of the downstream partition plate 22 are fitted in guide grooves 38 (see FIG. 4 and 5) formed on an inner wall surface of the intake port 12, and thereby the downstream partition plate 22 is supported. The guide grooves 38 are formed to extend in a direction that intake air flows from an opening at an upstream end of the intake port 12 (an upper end of the intake pipe connection part 33) to the vicinities of upstream parts of the partition 26. That is, the downstream partition plate 22 is inserted to fit in the guide grooves 38 from the upstream side of the intake port 12 into the vicinity of the upstream part of the partition 26, and retained there to be parallel to the intake port 12 as seen from the axial direction of the crankshaft 4. As shown in FIG. 4, in this embodiment, the downstream partition plate 22 is formed in a length such that it is separated to the upstream side from the partition 26 by a length D.

Further, as shown in FIG. 2, the downstream partition plate 22 is inclined in a manner such that an extension line L from the downstream partition plate 22 toward the combustion chamber 31 passes between a valve face center C of a valve disc 14a of the intake valve 14 (the center of a lower surface of the valve disc 14a) and an edge A of the lower surface of the valve disc 14a, which is positioned close to the center of the combustion chamber 31, as seen from the axial direction of the crankshaft 4. This design, even when taken without the other features of the present embodiment, is effective to influence the air flow with closed tumble control valve, as outlined further below.

The intake passage injector 18 is provided in an upper part of the intake port 12 constructed as described above, and the in-cylinder injector 17 is provided in a lower part thereof.

The intake passage injector 18 is mounted on a part between a part at the upper end of the intake pipe connection part 33, on which the intake manifold 34 is mounted, and an upper end of the cylinder head 7 (the cam housing 8). In other words, the intake passage injector 18 is positioned in a space S1 between the upper end of the cylinder head 7 and the intake manifold 34. This design, even when taken without the other features of the present embodiment, provides a very effective and beneficial solution to input fuel into the air flow and the combustion chamber, as outlined further below.

As shown in FIGs. 2 and 4, the intake passage injector 18 is formed to inject fuel F into an injector connection part 39 formed in a manner such that an upper wall part of the intake port 12 swells out upward. The intake passage injector 18 injects fuel F into each of the first bifurcating port 27 and the second bifurcating port 28 through the injector connection part 39. The intake passage injector 18 according to this embodiment mainly supplies fuel when operation of the engine 1 is in a low or medium operation range.

The in-cylinder injector 17 is mounted at a lower end of the cylinder head 7, which is also an end on the inner side of the V-bank. In other words, the in-cylinder injector 17 is provided in an inner space S2 between the intake port 12 of the first cylinder line 2 and the intake port 12 of the second cylinder line 3. In this embodiment, as shown in FIGS. 1 and 2, the in-cylinder injector 17 is mounted in the cylinder head 7 in a manner such that it is positioned in a lower part of the intake port 12 and extends generally in parallel with the intake port 12 as seen from the axial direction of the crankshaft 4. As shown in FIGs. 3 and 7, the in-cylinder injector 17 is positioned in a vicinity of a lower part of the partition 26 for partitioning the first bifurcating port 27 and the second bifurcating port 28 from each other.

As shown in FIGs. 3 and 4, a fuel injecting part 17a of the in-cylinder injector 17 is inserted into a fuel injection port 40 formed in the upper wall 32 of the combustion chamber 31 to be positioned between openings 27a and 28a at the downstream ends of the first bifurcating port 27 and the second bifurcating port 28. The in-cylinder injector 17 mainly supplies fuel when operation of the engine 1 is in a high speed and high load operation range. An injection timing of the in-cylinder injector 17 is set in a manner such that fuel is injected in an intake stroke.

The exhaust port 13 is positioned on the outer side of the V-bank of the cylinder head 7, and formed to bifurcate similarly to the intake port 12. An exhaust device (not shown) is connected to an exhaust exit of the exhaust port 13.

As shown in FIG. 1, the intake manifold 34 is constructed with an auxiliary intake manifold 41 fixedly placed on the intake pipe connection part 33, and a main intake manifold 42 removably mounted on an upper end of the auxiliary intake manifold 41. Hereinafter, a position vicinal to the intake manifold 34 will be simply referred as "the intake manifold side."

The auxiliary intake manifold 41 is formed into a prescribed shape from aluminum alloy by casting. As shown in FIG. 1, in the auxiliary intake manifold 41, an intake passage 43 for the intake manifold side of each of the cylinders, which connects to the intake port 12 of the first cylinder line 2, is formed on one side. An intake passage 44 for the intake manifold side of each of the cylinders, which connects to the intake port 12 of the second cylinder line 3, is formed on the other side. The intake passage extending obliquely upward from the combustion chamber in the present teaching is constructed with the intake passages 43 and 44 for the intake manifold side, which are formed in the auxiliary intake manifold 41, and the intake ports 12. The intake passages 43 and 44 for the intake manifold side are formed in shapes such that the intake ports 12 extend obliquely upward.

The downstream partition plates 22 in the intake ports 12, the upstream partition plates 35 forming the partition plates in the present teaching, and also tumble control valves 45 are provided in the auxiliary intake manifold 41.

The upstream partition plate 35 is formed from aluminum alloy into a body separate from the auxiliary intake manifold 41. As shown in FIG. 2, the upstream partition plate 35 is provided in a position such that the upstream partition plate 35 is extended obliquely upward as seen from the axial direction of the crankshaft 4 at a tilt angle the same as the downstream partition plate 22.

The upstream partition plate 35 is supported by the auxiliary intake manifold 41 with a supporting structure as same as the supporting structure of the downstream partition plate 22. That is, both edges of the upstream partition plate 35 are fitted in guide grooves 46 (see FIG. 4) formed on an inner wall of the intake passage of the auxiliary intake manifold 41, and thereby the upstream partition plate 35 is retained in the auxiliary intake manifold 41. The upstream partition plate 35 according to this embodiment is provided in a position such that it partitions the intake passages 43 and 44 for the intake manifold side into an upper intake passage 47 and a lower intake passage 48 as seen from the axial direction of the crankshaft 4.

The upstream partition plate 35 is formed to extend from a lower end of the auxiliary intake manifold 41 to a part, which is slightly upper than the vertical center part of the auxiliary intake manifold 41. A lower end of the upstream partition plate 35 is formed to contact with an upper end of the downstream partition plate 22 over its entire width, and prevent a communicative connection between the upper intake passages 47 and 36, and the lower intake passages 48 and 37 in a connection part between the partition plates 22 and 35.

The tumble control valve 45 is formed with a butterfly valve for opening or closing a part of the intake passages 43 and 44 for the intake manifold side in the auxiliary intake manifold 41, and provided in a vicinity of an upstream part of the upstream partition plate 35 in the auxiliary intake manifold 41. The intake control device 21 in the present teaching is constructed with the auxiliary intake manifold 41 having the tumble control valve 45, the downstream partition plate 22, and the upstream partition plate 35.

The valve disc 45a of the tumble control valve 45 is supported by a valve shaft 45b extending in the axial direction of the crankshaft 4, and rotates between an open position shown by the solid line in FIG. 2 and a close position shown by the chain double-dashed line in FIG. 2 in the auxiliary intake manifold 41 due to a rotation of the valve shaft 45b.

As shown in FIG. 4, the valve disc 45a is formed with a disc in a shape the same as cross sections of upper half parts of the intake passages 43 and 44 for the intake manifold side. The valve disc 45a becomes parallel to a flowing direction of intake air when it rotates to the open position, and closes the upstream end of the upper intake passage 47 when it rotates to the close position.

The valve shaft 45b passes through the auxiliary intake manifold 41 in the axial direction of the crankshaft 4, and is shared by the tumble control valves 45 of other adjoining cylinders (not shown). The valve shaft 45b is connected to a motor (not shown), and operated in a prescribed period. The tumble control valve 45 according to this embodiment closes when operation of the engine 1 is in a low speed and low load operation range, and opens in other operation ranges.

The upper intake passage 47 and the lower intake passage 48 provided in the auxiliary intake manifold 41 are formed in a manner such that the tumble control valves 45 are positioned in vicinities of their inlets.

As shown in FIG. 2, a bottom wall 51, which is a part of a wall forming a part around the inlet of the lower intake passage 48 and positioned on the side opposite to the upstream partition plate 35, is inclined to be gradually separated from the upstream partition plate 35 as proceeding to a more upstream part. In this embodiment, a tilt angle α (see FIG. 2) of the bottom wall 51 to an upstream partition plate 35 is set an angle between approximately 25° and 30°. An upstream end of the inclined bottom wall 51 is connected to a straight part 52 extending downward in parallel with the upstream partition plate 35 from an upstream end of the auxiliary intake manifold 41.

As shown in FIG. 1, the main intake manifold 42 connected to the upstream end of the auxiliary intake manifold 41 is constructed with pipe parts 53 connected to the intake passages 43 and 44 for the intake manifold side of the auxiliary intake manifold 41, and a surge tank 54 provided at upstream ends of the pipe parts 53. Three separate plastic parts are assembled by oscillation welding, and thereby the main intake manifold 42 according to this embodiment is formed in a prescribed shape.

As shown in FIG. 1, the pipe parts 53 are formed to extend from the auxiliary intake manifold 41 to parts above the second cylinder line 3. Therefore, a part above the space S1, in which the intake passage injector 18 of the second cylinder line 3, is covered by the pipe part 53.

As shown in FIG. 1, the surge tank 54 is disposed above the head cover 9 of the second cylinder line 3. An air inlet pipe 55 extending toward the first cylinder line 2 is provided at an end of the surge tank 54 in the axial direction of the crankshaft 4. An end part of the air inlet pipe 55 is positioned above the first cylinder line 2. A throttle valve 56 is provided on the end part.

Air passed through the throttle valve 56 passes through the air inlet pipe 55, the surge tank 54, the pipe parts 53, the intake passages 43 and 44 for the intake manifold side, and the intake ports 12, and flows into the combustion chambers 31.

In the engine 1 including the intake control device 21 constructed as described above, in the case that the tumble control valve 45 is closed, intake air flows only into the lower intake passage 48 in the auxiliary intake manifold 41. In the lower intake passage 48, the bottom wall 51 around its inlet is inclined to be gradually separated from the upstream partition plate 35 as proceeding toward a more upstream part. Thus, the inlet is wide and an inflow of intake air is facilitated.

Intake air flowing around the bottom wall 51 hits the bottom wall 51, thereby its flowing direction is changed, and the intake air flows toward the upstream partition plate 35 as shown by the arrows in FIG. 2. At this point, the bottom wall 51 formed around the inlet of the lower intake passage 48 substantially functions as an air funnel, and thereby intake air smoothly flows from an inside of the auxiliary intake manifold 41 into the intake port 12.

Therefore, with the intake control device 21 according to this embodiment, although including the upstream partition plate 35 and the downstream partition plate 22 in the intake passage in the intake port 12 and the auxiliary intake manifold 41, a flow coefficient of intake air in a state that the tumble control valve 45 is closed can be relatively larger than the conventional intake control device.

As a result of having a large flow coefficient of intake air as mentioned above, in the intake control device 21, if the tumble control valve 45 is closed, a large amount of intake air can flow along the upstream partition plate 35 and the downstream partition plate 22 around the partition plates 22 and 35 in the lower intake passage in the auxiliary intake manifold 41 and the intake port 12.

The intake air passes between the downstream openings 27a and 28a of the intake port 12 (exits of the intake passage) and the intake valve 14 as seen from the axial direction of the crankshaft 4 and flows obliquely into the cylinder while the intake air concentrates around the upstream partition plate 35 and the downstream partition plate 22, in other words, while a large amount of intake air flows around the center part of the intake passage formed with the upper intake passages 36 and 47 and the lower intake passages 37 and 48. A flowing direction of intake air in this case is shown by the arrows in FIG. 2.

Therefore, with the intake control device 21 according to this embodiment, without using a flow straighting member moving linked with the tumble control valve, intake air can be sent into the cylinder in a manner such that it passes through the center of the combustion chamber 31 as seen from the axial direction of the cylinder. Intake air flows into the cylinder in such a manner, and thus intake air does not directly hit an end of a bore wall surface of the cylinder bore 10 around the cylinder head 7. Therefore, a flowing direction and a flow speed of intake air are retained as long as possible. That is, with the intake control device according to this embodiment, intake air flows obliquely into the cylinder in a manner such that it gathers around the axis of the cylinder, and thereby an effective tumble is generated in the cylinder.

Meanwhile, if the tumble control valve 45 is opened, intake air flows into the upper intake passage 47 of the auxiliary intake manifold 41, a large amount of intake air flows into the cylinder passing through both the upper intake passages 36 and 47 and the lower intake passages 37 and 48 of the auxiliary intake manifold 41 and the intake port 12, and thereby a large output can be obtained in the engine 1.

Accordingly, in the engine 1 including the intake control device 21 according to this embodiment, an effective tumble is generated by closing the tumble control valve 45, thereby an improvement in fuel efficiency and purification of exhaust gas are facilitated. Also, the engine 1 can make high speed and high load operation by opening the tumble control valve 45.

The downstream partition plate 22 according to this embodiment is inclined in a manner such that an extension line L from the downstream partition plate 22 toward the combustion chamber 31 passes between the valve face center C of the intake valve 14 and the edge A of the lower surface of the valve disc 14a, which is positioned close to the center of the combustion chamber 31. Therefore, in the intake control device 21 with such a construction, intake air flows into the cylinder through the lower intake passages 37 and 48 in a state that the tumble control valve 45 is closed, and a part of the intake air, which hits the valve disc 14a of the intake valve 14, flows in the direction opposite to the intake port 12 as seen from the axial direction of the crankshaft 4 as shown by the arrows in FIG. 2. Accordingly, intake air hits the valve disc 14a of the intake valve 14, thereby intake air is prevented from flowing in the direction that a tumble is weakened, and thus a tumble can be generated further effectively.

In the foregoing embodiment, descriptions are made about an example that "the intake passage extending obliquely upward from the combustion chamber" in the present teaching is formed with the intake port 12 and the auxiliary intake manifold 41. However, the present teaching is not limited to this case, but the intake passage can be constructed only with the intake port 12. In such a case, the tumble control valve 45 is mounted in the cylinder head 7.

In the above embodiment, descriptions are made about an example that one cylinder includes the in-cylinder injector 17 and the intake passage injector 18. However, the cylinder can include only either one of the injector 17 or 18.

The description above discloses in order to achieve the object, an embodiment of the intake control device for an engine including: a partition plate provided in an intake passage extending obliquely upward from a combustion chamber as seen from the axial direction of a crankshaft for dividing the intake passage into an upper intake passage and a lower intake passage; and a tumble control valve provided in a vicinity of an upstream part of the partitioning plate in the intake passage for opening or closing a part of the intake passage, in which the tumble control valve opens or closes the intake passage upper than the partition plate, and a bottom wall, which is a part of a wall forming a part around an inlet of the lower intake passage and positioned on the side opposite to the partition plate, is slantly formed to be gradually separated from the partition plate as proceeding to a more upstream part (first embodiment).

The partition plate may be inclined in a manner such that an extension line from the partition plate toward the combustion chamber passes between the center of a lower surface of a valve disc of an intake valve and an edge of the lower surface of the valve disc, which is positioned close to the center of the combustion chamber (second embodiment).

According to the present teaching of the first embodiment, the tumble control valve is closed, and thereby intake air flows only into the intake passage lower than the partition plate. The bottom wall around the inlet of the lower intake passage is inclined to be separated from the partition plate as proceeding to the more upstream part, and thus the inlet is wide and an inflow of intake air is facilitated.

Intake air flowing around the bottom wall hits the bottom wall, thereby its flowing direction is changed, and the intake air flows toward the partition plate. At this point, the bottom wall formed around the inlet of the lower intake passage substantially functions as an air funnel. Therefore, with the intake control device according to the present invention, although having the partition plate in the intake passage, a flow coefficient of intake air in a state that the tumble control valve is closed becomes larger than the conventional intake control device.

Consequently, in the intake control device, the tumble control valve is closed, and thereby a large amount of intake air can flow along the partition plate around the partition plate in the lower intake passage. The intake air passes between an exit of the intake passage and the intake valve as seen from the axial direction of the crankshaft and flows obliquely into the cylinder while the intake air concentrates around the partition plate as described above, in other words, while a large amount of intake air flows around the center part of the intake passage formed with the upper and lower intake passages.

That is, without using a flow straighting member moving linked with the tumble control valve, intake air can be sent into the cylinder in a manner such that it passes through the center of the combustion chamber as seen from the axial direction of the cylinder.

Intake air flows obliquely into the cylinder in a manner such that it gathers around the axis of the cylinder as described above, and thereby a tumble further effective for combustion is generated in the cylinder. An effective tumble is a tumble such that a whirl of intake air retains through an end period of a compression stroke.

Such a so-called strong tumble is generated in the cylinder, thereby a fuel-air mixture intensively flows in the combustion chamber at a point that is in the end period of a compression stroke and just before an ignition, and combustion is made in a good condition.

Meanwhile, if the tumble control valve is opened, a large amount of intake air flows into the cylinder through both the upper and lower intake passages, and a large output can be obtained in the engine.

Therefore, in the engine including the intake control device according to the present teaching of the first embodiment, a tumble effective for combustion is generated by closing the tumble control valve as described above, and thereby fuel efficiency can be improved and generation of harmful substance can be prevented. Also, this engine can make high speed and high output operation by opening the tumble control valve.

According to the teaching of the second embodiment, intake air flows into the cylinder through the lower intake passage in a state that the tumble control valve is closed, and a part of the intake air, which hits the valve disc of the intake valve, flows in the direction opposite to the intake passage as seen from the axial direction of the crankshaft. Therefore, according to the second embodiment, intake air hits the valve disc of the intake valve, thereby intake air is prevented from flowing in a direction that a tumble is weakened, and thus a further effective tumble can be generated.

The description above discloses, amongst others, a first embodiment disclosing an intake control device for an engine, comprising: a partition plate provided in an intake passage extending obliquely upward from a combustion chamber as seen from the axial direction of a crankshaft for dividing the intake passage into an upper intake passage and a lower intake passage; and a tumble control valve provided in a vicinity of an upstream part of the partitioning plate in the intake passage for opening or closing a part of the intake passage, wherein the tumble control valve opens or closes the intake passage upper than the partition plate, and a bottom wall, which is a part of a wall forming a part around an inlet of the lower intake passage and positioned on the side opposite to the partition plate, is slantly formed to be gradually separated from the partition plate as proceeding to a more upstream part.

According to a second embodiment, the partition plate is inclined in a manner such that an extension line from the partition plate toward the combustion chamber passes between the center of a lower surface of a valve disc of an intake valve and an edge of the lower surface of the valve disc, which is positioned close to the center of the combustion chamber.

The description in particular discloses, in order to realize further effective tumble generation in a cylinder while having a simple construction, an embodiment having partition plates (upper partition plate 35 and lower partition plate 22) provided in an intake passage extending obliquely upward from a combustion chamber 31 as seen from the axial direction of a crankshaft are included. The partition plates divide the intake passage into upper intake passages 36 and 47, and lower intake passages 37 and 48. A tumble control valve 45 provided in an upstream vicinity of the partition plate in the intake passage is included. The tumble control valve 45 opens or closes the upper intake passage 47. A bottom wall 51, which is a part of a wall forming a part around an inlet of the lower intake passage 48 and positioned on the side opposite to the upstream partition plate 35, is inclined to be gradually separated from the upstream partition plate 35 as proceeding to a more upstream part.

## Claims

1. Engine comprising a cylinder, an intake passage, and an intake control device for generating a tumble flow inside the cylinder, said intake control device comprising a partition plate provided in the intake passage separating the intake passage into first and second intake passages, and a tumble control valve provided at an upstream end of the partition plate to open and close only one of the first and second sub-intake passages, wherein
a wall section forming part of the inlet of that one of the first or second sub-intake passages not to be closed or opened with the tumble control valve is formed as an air funnel for the air flowing into the respective one of the sub-intake passages,
**characterized in that**
a tilt angle (α) of the wall section relative to the partition plate is set to an angle between 25° to 30°.

2. Engine according to claim 1, **characterized in that** said wall section around the inlet is inclined to be gradually separated further away from the partition plate as proceeding to a more upstream part.

3. Engine according to one of the claims 1 or 2, **characterized in that** the partition plate provided in the intake passage extends obliquely upward from a combustion chamber as seen from the axial direction of a crankshaft for dividing the intake passage into an upper sub-intake passage and a lower sub-intake passage as seen from the axial direction of the crankshaft, and **in that** the tumble control valve provided in a vicinity of an upstream part of the partitioning plate in the intake passage for opening or closing a part of the intake passage is configured to open or close the intake passage upper than the partition plate, and a bottom wall, which is a part of a wall forming a part around an inlet of the lower intake passage and positioned on the side opposite to the partition plate, is slantly formed to be gradually separated from the partition plate as proceeding to a more upstream part.

4. Engine according to at least the preamble portion of claim 1, **characterized in that** the partition plate is inclined in a manner such that an extension line from the partition plate toward the combustion chamber passes between the center of a lower surface of a valve disc of an intake valve and an edge of the lower surface of the valve disc, which is positioned close to the center of the combustion chamber.

## Patentansprüche

1. Brennkraftmaschine, die aufweist einen Zylinder, einen Einlasskanal und eine Einlasssteuerungsvorrichtung zum Erzeugen einer Fallströmung innerhalb des Zylinders, wobei die Einlasssteuerungsvorrichtung eine Trennplatte aufweist, vorgesehen in dem Einlasskanal, die den Einlasskanal in einen ersten und einen zweiten Einlasskanal trennt, und ein Fallstrom- Steuerungsventil, vorgesehen an einem stromaufwärtigen Ende der Trennplatte, um nur einen von dem ersten oder zweiten Sub- Einlasskanal zu öffnen oder zu schließen, wobei ein Wandabschnitt, der einen Teil des Einlasses desjenigen des ersten oder zweiten Sub- Einlasskanales bildet, der nicht mit dem Fallstrom- Steuerungsventil geschlossen oder geöffnet wird, als ein Lufttrichter für die Luft gebildet ist, die in diesen jeweiligen der Sub- Einlasskanäle strömt,
**dadurch gekennzeichnet, dass**
ein Neigungswinkel (α) des Wandabschnittes in Bezug zu der Trennplatte auf einen Winkel zwischen 25° bis 30° festgelegt ist.

2. Brennkraftmaschine nach Anspruch 1, **dadurch gekennzeichnet, dass** der Wandabschnitt rund um den Einlass geneigt ist, um sich allmählich weiter von der Trennplatte mit zunehmender Erstreckung zu einem weiter stromaufwärtigen Teil zu entfernen.

3. Brennkraftmaschine nach einem der vorhergehenden Ansprüche 1 oder 2, **dadurch gekennzeichnet, dass** die Trennplatte, vorgesehen in dem Einlasskanal, sich schräg nach oben von einer Brennkammer erstreckt, wenn gesehen aus der axialen Richtung einer Kurbelwelle, um den Einlasskanal in einen oberen Sub-Einlasskanal und einen unteren Sub- Einlasskanal zu teilen, wenn aus der axialen Richtung der Kurbelwelle gesehen, und dadurch, dass das Fallstrom- Steuerungsventil, vorgesehen in der Nähe eines stromaufwärtigen Teiles der Trennplatte in dem Einlasskanal zum Öffnen oder Schließen eines Teiles des Einlasskanales, konfiguriert ist, den Einlasskanal weiter oben als die Trennplatte zu öffnen oder zu schließen, und eine Bodenwand, die ein Teil der Wand ist, die ein Teil rund um den Einlass des unteren Einlasskanales bildet und auf der Seite gegenüberliegend zu der Trennplatte positioniert ist, schräg gebildet ist, um sich allmählich weiter von der Trennplatte mit zunehmender Erstreckung zu einem weiter stromaufwärtigen Teil zu entfernen.

4. Brennkraftmaschine nach zumindest dem Oberbegriff von Anspruch 1, **dadurch gekennzeichnet**, das die Trennplatte in einer Weise derart geneigt ist, dass eine Verlängerungslinie von der Trennplatte in Richtung zu der Brennkammer zwischen der Mitte einer unteren Oberfläche einer Ventilplatte eines Einlassventiles und einer Kante der unteren Oberfläche der Ventilplatte, die nahe zu der Mitte der Brennkammer positioniert ist, hindurchgeht.

## Revendications

1. Moteur comprenant un cylindre, un passage d'admission, et un dispositif de commande d'admission pour produire un flux tourbillonnaire transversal à l'intérieur du cylindre, ledit dispositif de commande d'admission comprenant une plaque de séparation disposée dans le passage d'admission séparant le passage d'admission en premier et second passages d'admission, et une soupape de commande de tourbillon transversal disposée au niveau d'une extrémité amont de la plaque de séparation pour ouvrir et fermer seulement un des premier et second passages d'admission secondaire, dans lequel
une section de paroi formant une partie de l'admission de celui du premier ou du second passage d'admission secondaire qui ne doit pas être fermé ou ouvert avec la soupape de commande de tourbillon transversal est formée comme un entonnoir d'air pour l'air s'écoulant dans le passage respectif des passages d'admission secondaire,
**caractérisé en ce que**
un angle d'inclinaison (α) de la section de paroi par rapport à la plaque de séparation est fixé à un angle entre 25° et 30°.

2. Moteur selon la revendication 1, **caractérisé en ce que** ladite section de paroi autour de l'admission est inclinée pour être progressivement séparée davantage en s'éloignant de la plaque de séparation en continuant vers une partie plus en amont.

3. Moteur selon l'une des revendications 1 ou 2, **caractérisé en ce que** la plaque de séparation disposée dans le passage d'admission s'étend en oblique vers le haut à partir d'une chambre de combustion lorsque l'on regarde à partir de la direction axiale d'un
vilebrequin pour diviser le passage d'admission en un passage supérieur d'admission secondaire et un passage inférieur d'admission secondaire lorsque l'on regarde à partir de la direction axiale du vilebrequin, et **en ce que** la soupape de commande de tourbillon transversal disposée au voisinage d'une partie amont de la plaque de séparation dans le passage d'admission pour ouvrir ou fermer une partie du passage d'admission est configurée pour ouvrir ou fermer le passage d'admission plus haut que la plaque de séparation, et une paroi de fond, qui est une partie d'une paroi formant une partie autour d'une admission du passage inférieur d'admission et positionnée sur le côté opposé à la plaque de séparation, est formée de façon inclinée pour être progressivement séparée de la plaque de séparation en continuant vers une partie plus en amont.

4. Moteur selon au moins la partie de préambule de la revendication 1, **caractérisé en ce que** la plaque de séparation est inclinée de sorte qu'une ligne d'extension allant de la plaque de séparation vers la chambre de combustion passe entre le centre d'une surface inférieure d'un disque de soupape d'une soupape d'admission et un bord de la surface inférieure du disque de soupape, qui est positionné près du centre de la chambre de combustion.
